# EUROPÄISCHE PATENTSCHRIFT

(11) **EP 3 003 804 B1**
(45) Veröffentlichungstag und Bekanntmachung des Hinweises auf die Patenterteilung: **19.07.2017**
(21) Anmeldenummer: 14724441.2
(22) Anmeldetag: 15.05.2014
(51) Int. Cl.: B60T 8/40, F04B 49/06

(54) **VERFAHREN ZUR FÖRDERUNG EINES DOSIERTEN HYDRAULIKVOLUMENS IN EINER FAHRZEUGBREMSANLAGE MITTELS EINES ELEKTRISCH ANGETRIEBENEN MOTORPUMPENAGGREGATS UND FAHRZEUGBREMSANLAGE**
METHOD FOR CONVEYING A METERED HYDRAULIC VOLUME IN A VEHICLE BRAKING SYSTEM BY MEANS OF AN ELECTRICALLY DRIVEN MOTOR PUMP ASSEMBLY AND VEHICLE BRAKING SYSTEM
PROCÉDÉ D'ALIMENTATION D'UN SYSTÈME DE FREINAGE D'UN VÉHICULE EN UN VOLUME HYDRAULIQUE DOSÉ AU MOYEN D'UN GROUPE MOTOPOMPE À ENTRAÎNEMENT ÉLECTRIQUE, ET SYSTÈME DE FREINAGE D'UN VÉHICULE

(30) Priorität: 28.05.2013 DE 102013209890
(43) Veröffentlichungstag der Anmeldung: 13.04.2016
(73) Patentinhaber: Continental Teves AG & Co. oHG, 60488 Frankfurt (DE)
(72) Erfinder: KUTZNER, Michael, 65843 Sulzbach (DE); TREIB, Alexander, 60439 Heddernheim (DE); SCHROTH, Hans, 63543 Neuberg (DE); HANDKE, Peter, 60385 Frankfurt am Main (DE); AKBARI-NAMWAR, Abolfazl, 64521 Groß-Gerau (DE)
(86) Internationale Anmeldenummer: PCT/EP2014/059956
(87) Internationale Veröffentlichungsnummer: WO 2014/191214

(56) Entgegenhaltungen:
- DE-A1- 10 355 239
- DE-A1- 19 622 754
- DE-A1-102008 018 818

## Beschreibung

Die Erfindung betrifft ein Verfahren zur Förderung eines dosierten Hydraulikvolumens in einer Fahrzeugbremsanlage mittels eines elektrisch angetriebenen Motorpumpenaggregats gemäß Oberbegriff von Anspruch 1 und eine Fahrzeugbremsanlage gemäß Oberbegriff von Anspruch 10.

Die bremsenbezogenen Komfort- und Sicherheitssysteme von Kraftfahrzeugen, wie etwa Antiblockiersysteme, Fahrstabilitätsregelsysteme, Abstandsregelsysteme oder Überschlagverhinderungssysteme, werden im Zuge stetig zunehmender Kundenansprüche immer feinfühliger geregelt. Voraussetzung für eine entsprechend feinfühlige Regelung ist es allerdings, auch den Pumpenmotor des hydraulischen Bremssystems entsprechend präzise regeln zu können. Üblicherweise wird eine besonders feinfühlige Regelung mittels pulsweitenmodulierter Stromsignale erreicht, wobei die Stromsignale bevorzugt mit einer Frequenz von bis zu 18 kHz moduliert werden. Ebenso ist es aber auch möglich, die Stromsignale mit Frequenzen zu modulieren, die größer sind als 18 kHz. Je höher im Allgemeinen die Frequenz der Modulation ist, desto feinfühliger wird der Pumpenmotor betrieben. Auch eine möglichst genaue Kenntnis über die jeweilige Winkellage des Motors bzw. der Pumpe ist in der Regel notwendig.

In diesem Zusammenhang offenbart die DE 10 2009 006 891 A1 einen Elektromotor für eine Hydraulikpumpe in einem Bremsenregelungssystem. Der Elektromotor besteht aus einem mit einer Motorwelle verbundenen Rotor und einem Stator mit mehreren Bürsten, wobei der mit Wicklungen versehene Rotor einen Kommutator mit mehreren Kommutatorlamellen umfasst. Um die Drehwinkelposition der Motorwelle genau erfassen zu können, ist eine der Kommutatorlamellen gegenüber den restlichen Kommutatorlamellen verlängert. Zur Kontaktierung der verlängerten Kommutatorlamelle weist weiterhin eine der Bürsten einen axialen Versatz auf. Somit kann ein für die Drehwinkelposition charakteristisches Signal über die versetzte Bürste abgegriffen werden. Da somit die tatsächliche Drehgeschwindigkeit des Motors unabhängig vom aufzubringenden Drehmoment erfassbar ist, kann über das Tastverhältnis der pulsweitenmodulierten Ansteuerung die Drehzahl stets auf den gewünschten Soll-Wert korrigiert werden.

Die DE 10 2008 018 818 A1 beschreibt ein elektrisches Motoransteuerungsverfahren mit Lastmomentanpassung. Ein Elektromotor wird dabei von einer gepulst regelnden Stromquelle angesteuert. Je nach aktueller Last ergibt sich für einen bestimmten Pumpenstrom bzw. ein bestimmtes Tastverhältnis des Ansteuerstroms eine bestimmte Motordrehzahl. Die Last während einer Motorumdrehung ist allerdings nicht konstant, da es sich um eine winkelabhängige Last, nämlich die hydraulische Pumpe einer Fahrzeugbremsanlage, handelt. Aus dem am Motor während einer Umdrehung anliegenden Spannungspotential wird ein Welligkeitssignal ausgelesen und auf eine Periodizität ausgewertet. Mittels einer winkellagenabhängigen Anpassung des Tastverhältnisses der Ansteuerpulse kann bei periodisch auftretenden Ereignissen somit eine konstante Drehgeschwindigkeit eingestellt werden, was zur Geräuschminderung beiträgt und somit den Fahrkomfort erhöht.

Nachteilig bei den aus dem Stand der Technik bekannten Verfahren und Vorrichtungen ist es jedoch, dass zum Stellen kleiner und kleinster Bremsdrücke bzw. zum Fördern vergleichsweise geringer Hydraulikvolumina der Pumpenmotor zwar nur für eine kurze Zeitspanne, allerdings mit voller Last angesteuert wird. Die damit einhergehenden hohen Anlaufströme verursachen Strom- und Spannungsschwankungen im gesamten Fahrzeugbordnetz, was zu Störungen der anderen Verbraucher des Fahrzeugbordnetzes führen kann bzw. eine entsprechend sichere und damit aufwändige Auslegung der anderen Verbraucher erfordert. Hinzu kommt, dass oftmals ein Winkellagensensor zur Bestimmung der aktuellen Motorwinkellage bzw. Pumpenwinkellage benötigt wird.

Der Erfindung liegt daher die Aufgabe zugrunde, ein Verfahren vorzuschlagen, welches die genannten Nachteile überwindet.

Diese Aufgabe wird erfindungsgemäß durch das Verfahren zur Förderung eines dosierten Hydraulikvolumens in einer Fahrzeugbremsanlage mittels eines elektrisch angetriebenen Motorpumpenaggregats gemäß Anspruch 1 gelöst.

Die Erfindung betrifft ein Verfahren zur Förderung eines dosierten Hydraulikvolumens in einer Fahrzeugbremsanlage mittels eines elektrisch angetriebenen Motorpumpenaggregats, bei welchem eine mechanische Pumpe des Motorpumpenaggregats mittels eines elektrischen Motors des Motorpumpenaggregats angetrieben wird, wobei der elektrische Motor mit einer ansteigenden Motorspannungsrampe beaufschlagt wird, wobei ein Motorstrom erfasst wird, wobei ein Förderbetrieb des Motorpumpenaggregats einsetzt, sobald ein durch den Motorstrom erzeugtes Motormoment eine Summe aus Schleppmoment, Losbrechmoment und Reibmoment des Motorpumpenaggregats übersteigt und wobei sich der Motorstrom bei Einsetzen des Förderbetriebs reduziert. Das Verfahren zeichnet sich dadurch aus, dass eine Motorspannung bei Erkennen einer Reduzierung des Motorstroms nach Ablauf eines vorgegebenen Zeitintervalls auf einen Wert reduziert wird, welcher den Förderbetrieb beendet.

Daraus ergibt sich der Vorteil, dass der Motor nicht unmittelbar mit dem vollen Motorstrom beaufschlagt wird, da der Motorstrom bis zum Anlaufen des Motors der vergleichsweise langsam ansteigenden Motorspannungsrampe folgt. Somit wird eine übermäßige Belastung des Fahrzeugbordnetzes und der weiteren, an das Fahrzeugbordnetz angeschlossenen Verbraucher durch Strom- und Spannungsschwankungen vermieden. Diese Verbraucher können damit auch vergleichsweise einfacher und weniger robust gegen Spannungs- und Stromschwankungen ausgelegt sein, da selbige durch das erfindungsgemäße Verfahren wesentlich reduziert werden. Somit lässt sich also der gesamte Aufbau der elektrischen Fahrzeuginfrastruktur vereinfachen.

Die Reduzierung des Motorstroms ist dabei ein bei Einsetzen des Förderbetriebs zwangsläufig auftretender Effekt, da sich das aufzubringende Motormoment bei Einsetzen des Förderbetriebs um den Betrag des Losbrechmoments reduziert. Somit folgt der Motorstrom ab dem Einsetzen des Förderbetriebs, bzw. ab dem Einsetzen einer Rotation und einer elektromotorischen Kraft, nicht länger der Motorspannungsrampe.

Bevorzugt wird der Motorstrom durch den Anker und die Bürste des elektrischen Motors erfasst. Sofern es sich um einen bürstenlosen elektrischen Motor handelt, kann auch ausschließlich der Motorstrom durch den Anker erfasst werden.

Da die Motorspannung bei Erkennen der Reduzierung des Motorstroms und damit bei Erkennen des Einsetzens des Förderbetriebs nach Ablauf des vorgegebenen Zeitintervalls wieder auf einen Wert reduziert wird, welcher keinen weiteren Förderbetrieb ermöglicht und somit also den Förderbetrieb beendet, kann das geförderte Hydraulikvolumen vergleichsweise exakt dosiert werden. Durch die Reduzierung der Motorspannung wird dabei auch der Motorstrom reduziert und sobald dieser zu gering zur Aufrechterhaltung des Förderbetriebs ist, endet der Förderbetrieb.

Insbesondere wird die Motorspannung auf den Wert 0 V reduziert. Dies gewährleistet ein schnelles und zuverlässiges Beenden des Förderbetriebs.

Das vorgegebene Zeitintervall kann entweder starr und unveränderbar vorgegeben sein oder anpassbar vorgegeben sein. Je länger die Dauer des Zeitintervalls ist, desto größer ist das geförderte Hydraulikvolumen.

Bevorzugt ist es vorgesehen, dass eine elektrische Ansteuerung des Motorpumpenaggregats pulsweitenmoduliert erfolgt, insbesondere mit einer Taktfrequenz von mindestens 1 kHz. Eine pulsweitenmodulierte Ansteuerung stellt eine vergleichsweise einfache und insbesondere kostengünstig realisierbare Möglichkeit zur veränderbaren Ansteuerung eines elektrischen Verbrauchers dar. Je höher die Taktfrequenz der Ansteuerung ist, desto feinfühliger erfolgt diese. Taktfrequenzen von 1 kHz und mehr haben sich als ausreichend erwiesen, um ein ruhiges und gleichmäßiges Einsetzen des Förderbetriebs zu gewährleisten.

Weiterhin ist es bevorzugt, dass das Zeitintervall infinitesimal ist. Daraus ergibt sich der Vorteil, dass der Förderbetrieb unmittelbar nach seinem Einsetzen wieder abgebrochen wird, wodurch nur ein sehr geringes Hydraulikvolumen gefördert wird. Dadurch wiederum kann das geförderte Hydraulikvolumen sehr genau dosiert werden.

Es ist vorgesehen, dass die Reduzierung durch Beobachten eines Gradienten des Motorstroms erkannt wird. Daraus ergibt sich der Vorteil, dass die Reduzierung auch bei vergleichsweise geringen Motorströmen auf einfache Art und Weise zuverlässig anhand des Vorzeichens des Gradienten erkennbar ist. Das Auftreten eines negativen Gradienten signalisiert in diesem Fall die Reduzierung des Motorstroms. Dabei ist es insbesondere vorgesehen, dass der negative Gradient mit einer hierfür ausgelegten elektronischen Schaltungsanordnung gebildet und beobachtet wird. Diese Schaltungsanordnung kann z.B. als relative Strommessschaltung ausgelegt sein, wie sie prinzipiell auch in einer Reihe von bereits bekannten Bremsensteuergeräten zum Erfassen des Motorstroms verwendet wird. Zusätzlich hat es sich jedoch als vorteilhaft erwiesen, dieser relativen Strommessschaltung einen niederohmigen Messwiderstand hinzuzufügen, welcher zur Kostenreduzierung auch als Leiterbahnwiderstand ausgeführt sein kann. Die Bildung des Gradienten kann statt mittels eines Software-Algorithmusses auch hardwarebasiert erfolgen, wobei in letzterem Fall unmittelbar nach der Gradientenbildung ein Interrupt erzeugt wird und der Gradient an einen hierfür ausgelegten Software-Algorithmus übermittelt wird.

Weiterhin ist es vorgesehen, dass das Verfahren nur in einem einzelnen Bremskreis einer mehrkreisigen Fahrzeugbremsanlage ausgeführt wird. Daraus ergibt sich der Vorteil, dass die eintretende Fahrzeugverzögerung reduziert wird bzw. bei einer zweikreisigen Fahrzeugbremsanlage im Wesentlichen halbiert wird. Somit kann die Fahrzeugverzögerung feinfühliger eingestellt und exakter geregelt werden.

Insbesondere ist es weiterhin vorgesehen, dass ein Trennventil und ein Umschaltventil eines Bremskreises der mehrkreisigen Fahrzeugbremsanlage, dessen elektrischer Motor des Motorpumpenaggregats nicht mit der Motorspannungsrampe beaufschlagt wird, geöffnet sind. Somit ist gewährleistet, dass in diesem Bremskreis kein Bremsdruck aufgebaut und somit keine Fahrzeugverzögerung herbeigeführt wird. Dies verbessert die feinfühlige Regelbarkeit der Fahrzeugverzögerung weiter. Insbesondere bei einer sogenannten Diagonalaufteilung der Bremskreise einer zweikreisigen Fahrzeugbremsanlage ergibt sich der weitere Vorteil, dass die Entstehung von Wechselmomenten und damit eine Vibrationsübertragung auf die Lenkung vermieden werden können.

Vorzugsweise zeichnet sich das erfindungsgemäße Verfahren dadurch aus, dass mittels der Motorspannung, des Motorstroms und eines bestimmten hydraulischen Drucks in der Fahrzeugbremsanlage eine Winkellage des Motors und/oder der Pumpe bestimmt wird. Über den Motorstrom und die Motorspannung kann beim Einsetzen des Förderbetriebs auf einfache Weise ein Energieeintrag in das Motorpumpenaggregat bestimmt werden. Unter Berücksichtigung des in der Fahrzeugbremsanlage vorherrschenden hydraulischen Drucks kann somit eine Winkellagenänderung des Motors bzw. der Pumpe bestimmt werden, womit wiederum ausgehend von der letzten bekannten Winkellage die jeweils aktuelle Winkellage bestimmbar ist. Somit ergibt sich der Vorteil, dass kein Winkellagesensor benötigt wird, was den Herstellungs- und Kostenaufwand für das Motorpumpenaggregat zu reduzieren hilft.

In einer weiteren bevorzugten Ausführungsform der Erfindung ist es vorgesehen, dass aus der Winkellage des Motors und/oder der Pumpe und dem vorgegebenen Zeitintervall das geförderte Hydraulikvolumen bestimmt wird. Da eine Änderung der Winkellage des Motors bzw. der Pumpe mit einem Förderbetrieb des Motorpumpenaggregats verbunden ist, kann z.B. mittels einer entsprechenden Kennlinie aus der Winkellagenänderung, insbesondere unter Berücksichtigung der absoluten Anfangswinkellage und absoluten Endwinkellage, das geförderte Hydraulikvolumen ebenso einfach wie zuverlässig bestimmt werden.

Weiterhin ist es vorteilhaft, dass das Verfahren sukzessive wiederholt wird bis ein vorgegebener hydraulischer Soll-Druck erreicht wird. Somit kann der erforderliche Soll-Druck in mehreren aufeinanderfolgenden Schritten sukzessive vergleichsweise feinfühlig aufgebaut werden, da das geförderte Hydraulikvolumen jeweils feinfühlig dosierbar ist. Dies ist insbesondere für alle diejenigen Fahrzeugsysteme von Vorteil, die nur geringfügige Druckänderungen anfordern, dabei aber komfortorientiert ausgelegt sind. Ein Beispiel hierfür ist etwa ein Abstands- und Geschwindigkeitsregelsystem.

Die Erfindung betrifft weiterhin eine Fahrzeugbremsanlage, umfassend mindestens eine elektronische Steuereinheit und mindestens einen hydraulischen Bremskreis mit einem elektrischen Motorpumpenaggregat, wobei ein elektrischer Motor des Motorpumpenaggregats eine mechanische Pumpe des Motorpumpenaggregats antreibt, wobei die Steuereinheit einen elektrischen Motor des Motorpumpenaggregats mit einer ansteigenden Motorspannungsrampe beaufschlagt, wobei die Steuereinheit einen Motorstrom erfasst, wobei ein Förderbetrieb des Motorpumpenaggregats einsetzt, sobald ein durch den Motorstrom erzeugtes Motormoment eine Summe aus Schleppmoment, Losbrechmoment und Reibmoment des Motorpumpenaggregats übersteigt und wobei sich der Motorstrom bei Einsetzen des Förderbetriebs reduziert. Die Fahrzeugbremsanlage zeichnet sich dadurch aus, dass die Steuereinheit eine Motorspannung bei Erkennen einer Reduzierung des Motorstroms nach Ablauf eines vorgegebenen Zeitintervalls auf einen Wert reduziert, welcher den Förderbetrieb beendet. Die erfindungsgemäße Fahrzeugbremsanlage verfügt somit über alle notwendigen Mittel zur Ausführung des erfindungsgemäßen Verfahrens. Indem die erfindungsgemäße Fahrzeugbremsanlage die Motorspannung bei Erkennen einer Reduzierung des Motorstroms auf einen Wert reduziert, welcher den Förderbetrieb des Motorpumpenaggregats beendet, ergeben sich die bereits beschriebenen Vorteile.

Bevorzugt ist es vorgesehen, dass die Fahrzeugbremsanlage das erfindungsgemäße Verfahren ausführt.

Weitere bevorzugte Ausführungsformen ergeben sich aus den Unteransprüchen und der nachfolgenden Beschreibung eines Ausführungsbeispiels an Hand von Figuren.

### Es zeigen

Fig. 1 den Verlauf der Motorspannung und des Motorstroms während der Motorspannungsrampe bis zum Einsetzen und Beenden des Förderbetriebs und
Fig. 2 ein Flussdiagramm eines möglichen Ablaufs des erfindungsgemäßen Verfahrens.

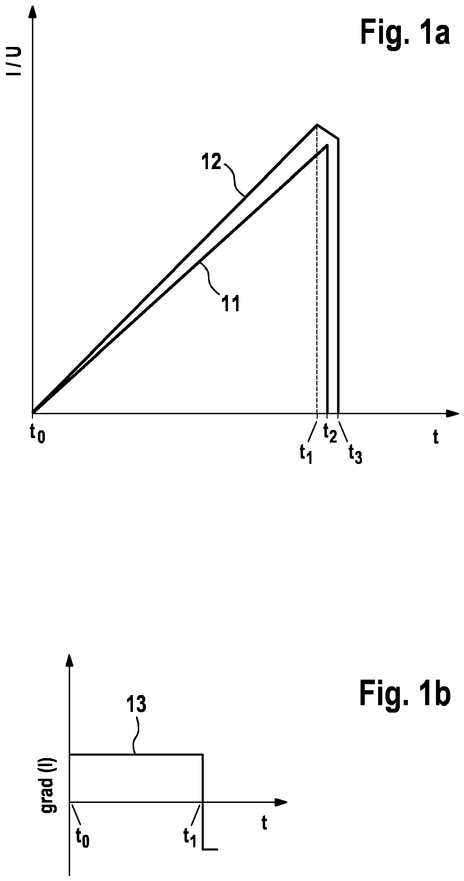

Fig. 1a zeigt Strom I und Spannung U des Motors über der Zeit t, wobei Kurve 11 die Motorspannung und Kurve 12 den Motorstrom beschreibt. Das Abfahren der Motorspannungsrampe beginnt dabei zum Zeitpunkt t₀ und ist durch den Anstieg von Kurve 11 im Intervall von t₀ bis t₂ dargestellt. Proportional zum Anstieg von Kurve 11 steigt auch der Motorstrom in Kurve 12, jedoch nur im Intervall von t₀ bis t₁. Zum Zeitpunkt t₁ überschreitet das erzeugte Motormoment die Summe aus Schleppmoment, Losbrechmoment und Reibmoment des Motorpumpenaggregats, wodurch der Förderbetrieb des Motorpumpenaggregats einsetzt. Dies wiederum führt zum Zeitpunkt t₁ zu einem Einbruch des Motorstroms. Da ein Gradient des Motorstroms gebildet und beobachtet wird, wird das Einbrechen bzw. die Reduzierung des Motorstroms anhand des Vorzeichenwechsels des nunmehr negativen Gradienten erkannt. Unmittelbar nach Erkennen der Reduzierung des Motorstroms, d.h. nach Ablauf eines infinitesimalen Zeitintervalls, wird die Motorspannung zum Zeitpunkt t₂ auf den Wert 0 V reduziert, um den Förderbetrieb zu beenden. Der Motorstrom kann dieser plötzlichen Reduzierung der Motorspannung nicht unmittelbar folgen und reduziert sich erst zum Zeitpunkt t₃ auf den Wert 0 A. In Fig. 1b ist Kurve 13 zu sehen, welche den Gradienten des Motorstroms darstellt. Wie zu sehen ist, nimmt der Gradient einen konstanten positiven Wert an, solange der Motorstrom konstant steigt. Zum Zeitpunkt t₁ jedoch, wenn der Motorstrom einbricht, wechselt der Gradient sein Vorzeichen und ist nun negativ. Hieran wird das Einbrechen bzw. die Reduzierung des Motorstroms erkannt.

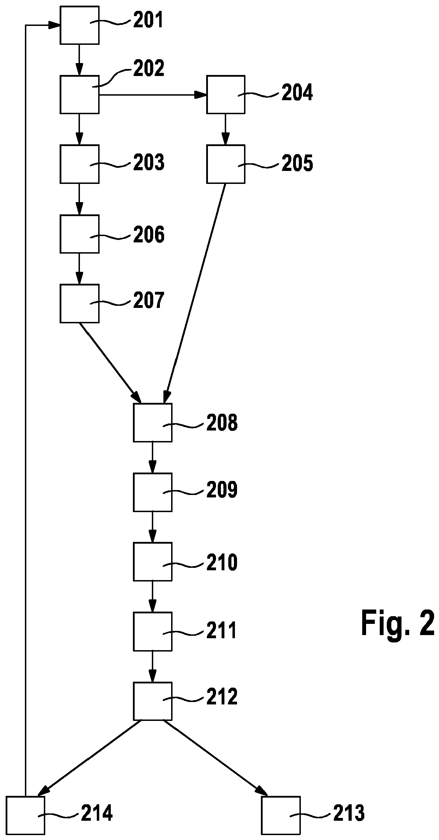

In Fig. 2 ist ein Flussdiagramm eines möglichen Ablaufs des erfindungsgemäßen Verfahrens dargestellt. In Verfahrensschritt 201 wird der Motor des Motorpumpenaggregats mit einer ansteigenden Motorspannungsrampe beaufschlagt. In Schritt 202 wird der Motorstrom, welcher durch die Motorspannungsrampe hervorgerufen wird, kontinuierlich und fortlaufend erfasst. Die zunehmende Motorspannung und der zunehmende Motorstrom verursachen in Schritt 203 ein zunehmendes Motormoment. In Verfahrensschritt 204 wird der Gradient des Motorstroms gebildet und in Schritt 205 wird der Gradient des Motorstroms kontinuierlich und fortlaufend beobachtet. Das erzeugte Motormoment übersteigt eine Summe aus Schleppmoment, Losbrechmoment und Reibmoment des Motorpumpenaggregats in Verfahrensschritt 206, so dass in Schritt 207 ein Förderbetrieb des Motorpumpenaggregats einsetzt. Das Einsetzten des Förderbetriebs wird durch die in Schritt 205 erfolgende kontinuierliche Beobachtung des Gradienten des Motorstroms erkannt, woraufhin in Schritt 208 die Motorspannung auf den Wert 0 V reduziert wird. Daraufhin endet der Förderbetrieb des Motorpumpenaggregats in Schritt 209. In Schritt 210 wird aus dem Motorstrom, der Motorspannung und dem hydraulischen Druck in der Fahrzeugbremsanlage eine Winkellagenänderung des elektrischen Motors bzw. der Pumpe bestimmt und anschließend wird aus dieser Winkellagenänderung unter Berücksichtigung der letzten absoluten Winkellage die aktuelle absolute Winkellage bestimmt. Im folgenden Verfahrensschritt 211 wird das geförderte Hydraulikvolumen bestimmt, was aufgrund der winkellagenabhängigen Förderweise der Pumpe unter Berücksichtigung der Anfangswinkellage und der Endwinkellage der Pumpe bzw. des Motors erfolgt. In Schritt 212 schließlich wird der aktuelle Druck in der Fahrzeugbremsanlage mit dem aufzubauenden Soll-Druck verglichen. Sofern der Soll-Druck erreicht ist, wird das Verfahren in Schritt 213 beendet. Sofern der Soll-Druck hingegen noch nicht erreicht ist, wird das Verfahren über Schritt 214 in Schritt 201 erneut ausgeführt.

## Patentansprüche

1. Verfahren zur Förderung eines dosierten Hydraulikvolumens in einer Fahrzeugbremsanlage mittels eines elektrisch angetriebenen Motorpumpenaggregats, bei welchem eine mechanische Pumpe des Motorpumpenaggregats mittels eines elektrischen Motors des Motorpumpenaggregats angetrieben wird, wobei der elektrische Motor mit einer ansteigenden Motorspannungsrampe beaufschlagt wird, wobei ein Motorstrom (12) erfasst wird, wobei ein Förderbetrieb des Motorpumpenaggregats einsetzt, sobald ein durch den Motorstrom (12) erzeugtes Motormoment eine Summe aus Schleppmoment, Losbrechmoment und Reibmoment des Motorpumpenaggregats übersteigt und wobei sich der Motorstrom (12) bei Einsetzen des Förderbetriebs reduziert, **dadurch gekennzeichnet, dass** eine Motorspannung (11) bei Erkennen einer Reduzierung des Motorstroms (12) nach Ablauf eines vorgegebenen Zeitintervalls auf einen Wert reduziert wird, welcher den Förderbetrieb beendet.

2. Verfahren nach Anspruch 1, **dadurch gekennzeichnet, dass** eine elektrische Ansteuerung des Motorpumpenaggregats pulsweitenmoduliert erfolgt, insbesondere mit einer Taktfrequenz von mindestens 1 kHz.

3. Verfahren nach mindestens einem der Ansprüche 1 und 2, **dadurch gekennzeichnet, dass** das Zeitintervall infinitesimal ist.

4. Verfahren nach mindestens einem der Ansprüche 1 bis 3, **dadurch gekennzeichnet, dass** die Reduzierung durch Beobachten eines Gradienten (13) des Motorstroms (12) erkannt wird.

5. Verfahren nach mindestens einem der Ansprüche 1 bis 4,
**dadurch gekennzeichnet, dass** das Verfahren nur in einem einzelnen Bremskreis einer mehrkreisigen Fahrzeugbremsanlage ausgeführt wird.

6. Verfahren nach Anspruch 5,
**dadurch gekennzeichnet, dass** ein Trennventil und ein Umschaltventil eines Bremskreises der mehrkreisigen Fahrzeugbremsanlage, dessen elektrischer Motor des Motorpumpenaggregats nicht mit der Motorspannungsrampe beaufschlagt wird, geöffnet sind.

7. Verfahren nach mindestens einem der Ansprüche 1 bis 6, **dadurch gekennzeichnet, dass** mittels der Motorspannung (11), des Motorstroms (12) und eines bestimmten hydraulischen Drucks in der Fahrzeugbremsanlage eine Winkellage des Motors und/oder der Pumpe bestimmt wird.

8. Verfahren nach Anspruch 7,
**dadurch gekennzeichnet, dass** aus der Winkellage des Motors und/oder der Pumpe und dem vorgegebenen Zeitintervall das geförderte Hydraulikvolumen bestimmt wird.

9. Verfahren nach mindestens einem der Ansprüche 1 bis 8,
**dadurch gekennzeichnet, dass** das Verfahren sukzessive wiederholt wird bis ein vorgegebener hydraulischer Soll-Druck erreicht wird.

10. Fahrzeugbremsanlage, umfassend mindestens eine elektronische Steuereinheit und mindestens einen hydraulischen Bremskreis mit einem elektrischen Motorpumpenaggregat, wobei ein elektrischer Motor des Motorpumpenaggregats eine mechanische Pumpe des Motorpumpenaggregats antreibt, wobei die Steuereinheit einen elektrischen Motor des Motorpumpenaggregats mit einer ansteigenden Motorspannungsrampe beaufschlagt, wobei die Steuereinheit einen Motorstrom (12) erfasst, wobei ein Förderbetrieb des Motorpumpenaggregats einsetzt, sobald ein durch den Motorstrom (12) erzeugtes Motormoment eine Summe aus Schleppmoment, Losbrechmoment und Reibmoment des Motorpumpenaggregats übersteigt und wobei sich der Motorstrom (12) bei Einsetzen des Förderbetriebs reduziert, **dadurch gekennzeichnet, dass** die Steuereinheit eine Motorspannung (11) bei Erkennen einer Reduzierung des Motorstroms (12) nach Ablauf eines vorgegebenen Zeitintervalls auf einen Wert reduziert, welcher den Förderbetrieb beendet.

11. Fahrzeugbremsanlage nach Anspruch 10, **dadurch gekennzeichnet, dass** die Fahrzeugbremsanlage ein Verfahren nach mindestens einem der Ansprüche 1 bis 9 ausführt.

## Claims

1. Method for delivering a metered hydraulic volume in a vehicle braking system by means of an electrically driven motor pump assembly, in which a mechanical pump of the motor pump assembly is driven by means of an electric motor of the motor pump assembly, wherein the electric motor is acted upon by a rising motor voltage ramp, wherein a motor current (12) is detected, and wherein a delivery mode of the motor pump assembly starts as soon as a motor torque generated by the motor current (12) exceeds a sum of drag torque, breakaway torque, and friction torque of the motor pump assembly, and wherein the motor current (12) reduces when the delivery mode starts,
**characterized in that** a motor current (11) is reduced to a value which terminates the delivery mode when a reduction in the motor current (12) is detected after a specified time interval has elapsed.

2. Method according to Claim 1, **characterized in that** an electric control of the motor pump assembly is carried out in a pulse-width modulated manner, in particular with a clock frequency of at least 1 kHz.

3. Method according to at least one of Claims 1 and 2,
**characterized in that** the time interval is infinitesimal.

4. Method according to at least one of Claims 1 to 3,
**characterized in that** the reduction is detected by observing a gradient (13) of the motor current (12).

5. Method according to at least one of Claims 1 to 4,
**characterized in that** Method is carried out only in a single brake circuit of a multicircuit vehicle braking system.

6. Method according to Claim 5,
**characterized in that** an isolating valve and a switchover valve of a brake circuit of the multicircuit vehicle braking system, whose electric motor of the motor pump assembly is not acted upon with the motor voltage ramp, are open.

7. Method according to at least one of Claims 1 to 6,
**characterized in that** an angular position of the motor and/or the pump is determined by means of the motor voltage (11), the motor current (12), and a certain hydraulic pressure in the vehicle braking system.

8. Method according to Claim 7,
**characterized in that** the delivered hydraulic volume is determined from the angular position of the motor and/or the pump and the specified time interval.

9. Method according to at least one of Claims 1 to 8,
**characterized in that** Method is successively repeated until a specified hydraulic setpoint pressure is reached.

10. Vehicle braking system, comprising at least one electronic control unit and at least one hydraulic brake circuit having an electric motor pump assembly, wherein an electric motor of the motor pump assembly drives a mechanical pump of the motor pump assembly, wherein the control unit acts upon an electric motor of the motor pump assembly with a rising motor voltage ramp, wherein the control unit detects a motor current (12), and wherein a delivery mode of the motor pump assembly starts as soon as a motor torque generated by the motor current (12) exceeds a sum of drag torque, breakaway torque, and friction torque of the motor pump assembly, and wherein the motor current (12) reduces when the delivery mode starts,
**characterized in that** the control unit reduces a motor current (11) to a value which terminates the delivery mode when a reduction in the motor current (12) is detected after a specified time interval has elapsed.

11. Vehicle braking system according to Claim 10,
**characterized in that** the vehicle braking system carries out a method according to at least one of Claims 1 to 9.

## Revendications

1. Procédé de refoulement d'un volume hydraulique dosé dans un système de freinage de véhicule au moyen d'un groupe de pompage motorisé entraîné électriquement, selon lequel une pompe mécanique du groupe de pompage motorisé est entraînée au moyen d'un moteur électrique du groupe de pompage motorisé, le moteur électrique étant alimenté avec une rampe de tension de moteur croissante, un courant de moteur (12) étant détecté, un régime de refoulement du groupe de pompage motorisé étant établi dès qu'un couple de moteur généré par le courant de moteur (12) dépasse une somme d'un couple de traînée, d'un couple initial de décollement et d'un couple de friction du groupe de pompage motorisé et le courant de moteur (12) se réduisant lors de l'établissement du régime de refoulement, **caractérisé en ce qu'**une tension de moteur (11) est réduite à une valeur qui met fin au régime de refoulement en cas de détection d'une réduction du courant de moteur (12) après écoulement d'un intervalle de temps prédéfini.

2. Procédé selon la revendication 1, **caractérisé en ce qu'**une commande électrique du groupe de pompage motorisé est réalisée par modulation d'impulsions en largeur, notamment avec une fréquence d'horloge d'au moins 1 kHz.

3. Procédé selon au moins l'une des revendications 1 et 2, **caractérisé en ce que** l'intervalle de temps est infinitésimal.

4. Procédé selon au moins l'une des revendications 1 à 3, **caractérisé en ce que** la réduction est reconnue par l'observation d'un gradient (13) du courant de moteur (12).

5. Procédé selon au moins l'une des revendications 1 à 4, **caractérisé en ce que** le procédé n'est mis en oeuvre que dans un seul circuit de frein d'un système de freinage de véhicule à plusieurs circuits.

6. Procédé selon la revendication 5, **caractérisé en ce qu'**une vanne de séparation et une vanne d'inversion d'un circuit de frein du système de freinage de véhicule à plusieurs circuits dont le moteur électrique du groupe de pompage motorisé n'est pas alimenté avec la rampe de tension de moteur sont ouvertes.

7. Procédé selon au moins l'une des revendications 1 à 6, **caractérisé en ce qu'**une position angulaire du moteur et/ou de la pompe est déterminée au moyen de la tension de moteur (11), du courant de moteur (12) et d'une pression hydraulique donnée dans le système de freinage de véhicule.

8. Procédé selon la revendication 7, **caractérisé en ce que** le volume hydraulique refoulé est déterminé à partir de la position angulaire du moteur et/ou de la pompe et de l'intervalle de temps prédéfini.

9. Procédé selon au moins l'une des revendications 1 à 8, **caractérisé en ce que** le procédé est répété successivement jusqu'à ce qu'une pression de consigne hydraulique prédéfinie soit atteinte.

10. Système de freinage de véhicule, comprenant au moins une unité de commande électronique et au moins un circuit de frein hydraulique comportant un groupe de pompage motorisé, un moteur électrique du groupe de pompage motorisé entraînant une pompe mécanique du groupe de pompage motorisé, l'unité de commande alimentant un moteur électrique du groupe de pompage motorisé avec une rampe de tension de moteur croissante, l'unité de commande détectant un courant de moteur (12), un régime de refoulement du groupe de pompage motorisé étant établi dès qu'un couple de moteur généré par le courant de moteur (12) dépasse une somme d'un couple de traînée, d'un couple initial de décollement et d'un couple de friction du groupe de pompage motorisé et le courant de moteur (12) se réduisant lors de l'établissement du régime de refoulement, **caractérisé en ce que** l'unité de commande réduit une tension de moteur (11) à une valeur qui met fin au régime de refoulement en cas de détection d'une réduction du courant de moteur (12) après écoulement d'un intervalle de temps prédéfini.

11. Système de freinage de véhicule selon la revendication 10, **caractérisé en ce que** le système de freinage de véhicule met en ouvre un procédé selon au moins l'une des revendications 1 à 9.
